# EUROPEAN PATENT APPLICATION

(11) **EP 0 899 131 A2**
(43) Date of publication of application: **03.03.1999**
(21) Application number: 98114889.3
(22) Date of filing: 07.08.1998
(51) Int. Cl.: B60B 21/12

(54) **All-purpose adapter for cycle wheel rims adapted to provide an easier and perfect fitting of the tyres**

(30) Priority: 25.08.1997 IT MI971964
(71) Applicant: Vittoria S.p.A., 24040 Madone (Bergamo) (IT)
(72) Inventor: Deetz, Josh, 24040 Madone, Bergamo (IT)
(74) Representative: Cicogna, Franco

(57) **Abstract**

An all-purpose adapter for cycle wheel rims (1) adapted to provide an easier and perfect fitting of the tyres comprises one or more layers (2,3) arranged on the rims having such a cross-section as to provide, together with the rims, an asymmetrical recess for the tyre, defined by side ridges delimiting with the rims (1) the tyre bead seats (7).

## Description

### BACKGROUND OF THE INVENTION

The invention relates to an all-purpose adapter for cycle wheel rims, adapted to provide an easier and perfect fitting of the tyres.

As is known, a requirement to be constantly met is that of easily, quickly and properly assembling the tyres of any types of cycles on their corresponding rims.

Prior cycle wheel rims are conventionally provided with side walls defining a housing for the tyre and simultaneously holding in their inside the tyre beads.

This tyre receiving region or channel, however, does not have a standardized shape and size suitable for all of the available rims, with a lot of consequent drawbacks.

In particular, assembling difficulties frequently occur since the tyre bead can be fitted in a difficult way in its operating position on the side edges of the rim.

This drawback makes the assembly operations very difficult and harduous.

Actually, the assembling of the tyre requires a good skillness, a long time and, moreover, the tyre can be frequently properly located only with great difficulties.

A further disadvantages, deriving from the above mentioned drawbacks, is that of a proper balancing of the tyre, as it is assembled on its rim.

This phenomenon may originate annoying vibrations during the operation or running of the tyre.

The above assembling and maintenance problems will also involve high costs and time losses for the user.

### SUMMARY OF THE INVENTION

The aim of the present invention is to overcome the above mentioned drawback of the prior art.

To that end, the invention specifically relates to an all-purpose adapter for cycle wheel rims, designed for providing a perfect fitting of the tyre, allowing said tyre to be accurately and quickly assembled, while always providing a proper locating of the tyre beads in the seats therefor, thereby providing a wheel-tyre assembly which is perfectly balanced with respect to the rotary axis thereof.

Briefly, according to the invention, an all-purpose adapter for cycle wheel rims has been provided, allowing a perfect fitting or anchoring of the tyres, said adapter comprising one or more layers to be arranged on the rim, having such a cross-section as to provide, together with the rim, an asymmetrical recess for the tyre, delimited at the sides thereof, by ridges delimiting, with the rim, the seats for the beads of said tyre.

The subject all-purpose adapter for cycle wheel rims, specifically designed to provide a perfect fitting or anchoring of the tyres, is characterized in that said adapted has the features disclosed in Claim 1.

The all-purpose adapter for cycle wheel rims, designed for providing an easier, quicker and perfect anchoring or fitting of the tyres according to the invention, provides the following advantages.

For each rim an actual tyre housing standardized region is obtained, thereby facilitating the assembling of the tyre and providing a more accurate assembling.

A further advantage derives from a perfect balancing of the cycle wheel including the all-purpose adapter according to the invention.

This advantages is also a consequence of the standardization which can be made.

In fact, the tyre can be assembled in such a precise and accurate way that a perfectly balanced wheel can be obtained, having a perfectly symmetrical arrangement and balancing with respect to its rotary axis.

Moreover, the adapter according to the invention, owing to the assembly precision afforded thereby will also allow to use, by adopting the subject adapter, the so-called "tubeless" tyres.

Moreover, the adapter according to the invention may be fitted to a lot of different rims at a very low cost since the assembling method can be easily automatized. This will also positively affect the overall cost for the user who will obtain a great saving due to the several above illustrated advantages, making available for the user a transport means having a better cost-efficiency ratio.

### BRIEF DESCRIPTION OF THE DRAWINGS

Further characteristics, advantages and constructional details of the all-purpose adapter for cycle wheel rims, specifically designed for providing a perfect fitting of the tyres according to the invention, will become more apparent hereinafter from the following disclosure of the accompanying drawing, illustrating, by way of an indicative, but not limitative, example, a preferred embodiment thereof.

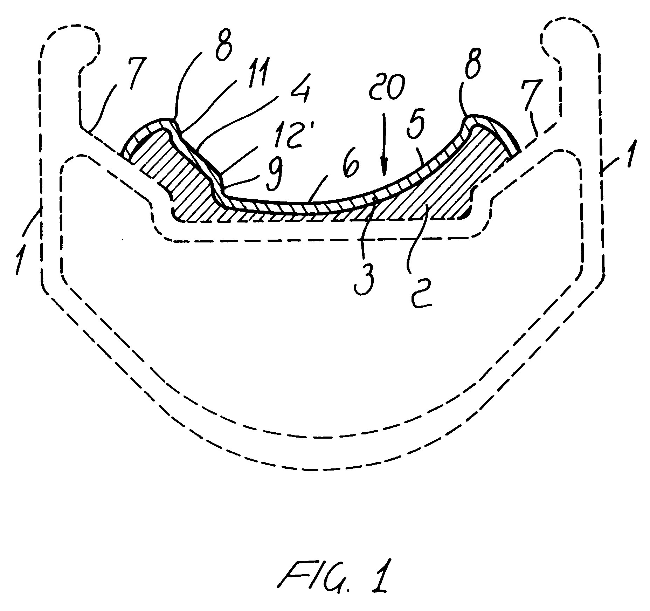

Figure 1 is a cross-sectional view of a rim thereon the all-purpose adapter for cycle wheel rims, designed for providing a perfect fitting of the tyre, according to the invention, has been applied.

### DESCRIPTION OF THE PREFERRED EMBODIMENT

With reference to the number references of Figure 1, on a conventional rim 1 is arranged a first layer 2 of a plastic material having very good adhesion properties, in the form of a continuous band. Said layer supports on the top thereof a second plastic material layer 3, in the form of a continuous band, preferably made of an extruded plastic material.

This latter material must be provided with a high stiffness in order to provide a proper assembling of the tyre.

The above illustrated layers 2, 3 define on the edges of the rim 1 two seats 7 adapted to firmly and safely house therein the two beads of the tyre.

The seats 7 are characterized in that they are provided, inwardly of the rim 1, with two ridges 8, defined by the overlaying of the layers 2 and 3.

Said layers define, in the rim 1, a recess which is asymmetrical for the tyre, which, in cross-section, is centrally provided with a rectilinear length 6, extending from a side with a curved portion 5 ending with one of the above mentioned ridges 8 and, on the other side, with a polygonal broken line 4 having rounded apex and ending with the other recess 8.

Said polygonal broken line 4 is provided, starting from the rectilinear length 6, with a first vertical segment 9, a segment 10 having a raising inclination or tilting and, finally, a subsequent vertical segment 11 coupling to one of the ridges 8.

It should be apparent that the shape and size of the several elements constituting the all-purpose adapter 20 for cycle wheel rims 1, designed for providing a perfect fitting of the tyres according to the invention can be changed depending on requirements, without departing from the disclosed inventive idea.

The assembling of the tyre on the rim 1, on which the all-purpose adapter 20 according to the invention has been arranged, is very easy, as already stated.

The provision of an asymmetrical recess for said tyre allows the latter to be assembled on the wheel by engaging one of the tyre bead in one of the seats 7, while leaving the other bead at a undetermined position inside said recess.

As the tyre is inflated, the other bead will automatically reach its seat 7.

In fact, as the tyre is inflated, the carcass of the tyre is radially expanded, thereby pushing the tyre beads outside of the wheel, one of said beads, however, being already locked by one of the seats 7, thereby the other bead will start to move toward the free seat 7 so as to jump its ridge 8 and engage in said seat 7, as the tyre pressure achieves a set value.

Alternatively, it is possible to engage both the tyre beads in the recess formed by the adapter 20 according to the invention.

Then, the tyre inflating operation is started.

The tyre carcass will be expanded thereby outwardly pushing the tyre beads.

Said beads, as they come near the ridges 8, will stop as far as the pressure will achieve a suitable value allowing to overcome the resistance to the feeding movement due to the mentioned ridges 8.

Then, the tyre beads will be engaged in their seats 7.

The present all-purpose adapter 20, as seen in cross-section, has an asymmetrical contour, with two side stabilizing ridges and a step element arranged at a side middle portion of said adapter.

Thus, independently from the housing region provided on any desired rims for holding the tyre beads therein, the use of the adapter 20 according to the present invention will provide an optimum configuration of said region, thereby allowing the tyre to be easily, quickly and accurately assembled.

## Claims

1. An all-purpose adapter for cycle wheel rims, adapted to provide a perfect fitting of a tyre, characterized in that said adapter comprises one or more layers (2, 3) arranged on said rim (1), having such a cross-section as to provide, in said rim (1) an asymmetrical recess for the tyre, defined on the sides thereof by ridges (8) delimiting with said rim (1) the seats (7) for said tyre beads.

2. An all-purpose adapter for cycle wheel rims, adapted to provide a perfect fitting of the tyre according to Claim 1, characterized in that said layers (2, 3) comprise a plastic material supporting layer (2) adhering to said rim (1) and a further layer (3) overlaying said layer (2) and made of an extruded plastic marterial.

3. An all-purpose adapter for cycle wheel rims, adapted to provide a perfect fitting of the tyre according to the preceding claims, characterized in that said layers (2, 3) are arranged on said rim (1) in the form of a band.

4. An all-purpose adapter for cycle wheel rims, adapted to provide a perfect fitting of the tyre, according to one or more of the preceding claims, characterized in that said recess is provided, in its cross-section, with a rectilinear length (6) which is extended on a side thereof by a curved length (5) and, on the other side thereof, by a polygonal broken line (4) provided with rounded apex, where the curved length (5) and polygonal broken line (4) are coupled to said ridges (8).

5. An all-purpose adapter for cycle wheel rims, adapted to provide a perfect fitting of the tyre, according to one or more of the preceding claims, characterized in that said polygonal broken line (4) comprises a vertical segment (9), followed by a raising segment (10) and a further vertical segment (11), connected to a ridge (8).

6. An all-purpose adapter, according to one or more of the preceding claims, characterized in that said adapter, as seen in cross-section, is provided with an asymmetrical contour, with two side stabilizing ridges (8) and a step element (12) arranged at a side middle portion of said adapter.

7. An all-purpose adapter for cycle wheel rims, adapted to provide a perfect fitting of the tyre, characterized in that said adapter comprises a plurality of specifically designed, arranged and coupled elements, and substantially as broadly disclosed and illustrated and for the intended objects.
